Europäisches Patentamt

**European Patent Office**

Office européen des brevets

(11) Veröffentlichungsnummer: **0 098 401**
**B1**

(12) **EUROPÄISCHE PATENTSCHRIFT**

(45) Veröffentlichungstag der Patentschrift:
27.08.86

(21) Anmeldenummer: 83105645.2

(22) Anmeldetag: 09.06.83

(51) Int. Cl.⁴: **B 60 K 5/12**

(54) **Antriebsaggregat für Kraftfahrzeuge.**

(30) Priorität: 03.07.82 DE 3224935

(43) Veröffentlichungstag der Anmeldung:
18.01.84 Patentblatt 84/3

(45) Bekanntmachung des Hinweises auf die Patenterteilung:
27.08.86 Patentblatt 86/35

(84) Benannte Vertragsstaaten:
DE FR GB IT

(56) Entgegenhaltungen:
DE - A - 2 056 102
DE - A - 2 249 555
DE - B - 2 455 790
DE - U - 7 910 507

(73) Patentinhaber: **Adam Opel Aktiengesellschaft,
Bahnhofsplatz 1 Postfach 1560, D-6090 Rüsselsheim
(DE)**

(72) Erfinder: **Eisenheimer, Willi, Ing. (grad.), Am Graben 11,
D-6093 Flörsheim (DE)**
Erfinder: **Zentgraf, Hans-Dieter, Lindenstrasse 58,
D-6097 Trebur 1 (DE)**

(74) Vertreter: **Baumgarten, Jochem, Dipl.-Ing. et al, C/O
Adam Opel Aktiengesellschaft
Bahnhofsplatz 1 Postfach 1560, D-6090 Rüsselsheim
(DE)**

# Beschreibung

Die Erfindung bezieht sich auf ein Antriebsaggregat für Kraftfahrzeuge mit einer hinteren Lagerung, bestehend aus einem Halter, der aus einem in Längsrichtung verlaufenden, zwischen zwei in Fahrzeuglängsrichtung gesehen hintereinanderliegenden Befestigungsstellen eine nach unten reichende U-Form bildenden Streifen besteht, wobei in der U-Form ein Dämpfungsblock vorgesehen ist, durch den ein Bolzen hindurchgeführt ist, der zwei seitlich des Halters liegende Abschnitte eines mit dem Antriebsaggregat verbundenen Armes od. dgl. verbindet, gemäss dem Oberbegriff des Anspruchs 1.

Wird bei einem Frontalaufprall des Kraftfahrzeuges auf ein Hindernis das Antriebsaggregat nach hinten verschoben, so wird über die vorstehend gekennzeichnete hintere Lagerung der Träger, nämlich ein Querträger der Karosserie, an dem sich die Lagerung befindet, in nachteiliger Weise in Mitleidenschaft gezogen. Der Querträger wird also vorzeitig verformt, d.h. die Verformung setzt über die Lagerstelle ein, bevor das Antriebsaggregat selbst mit ihm in Berührung kommt bzw. auf ihn direkt einwirkt. Um dies zu vermeiden, ist es durch die DE-OS 22 49 555 bekanntgeworden, die hintere Motorlagerung bei Überschreiten einer kritischen Stossbelastung abreissen zu lassen. Dabei fällt das Antriebsaggregat aber nicht wie beabsichtigt frei nach unten, sondern es kann ebenfalls durch seine Bewegung nach hinten Teile der Fahrgastzelle beschädigen.

Bei der weiterhin bekannten Anordnung nach der DE-AS 24 55 790 kommt es darauf an, einen rückwärtigen Träger für die Lagerung des Antriebsaggregates zu schaffen, der die Aufnahme von genügend Verformungsarbeit gewährleistet. Zu diesem Zweck ist das eine Ende des waagrecht verlaufenden Trägers durch Reibschluss mittels eines durch einen offenen Schlitz gehenden Befestigungsbolzen an einer Konsole befestigt, während die Befestigung des anderen Endes des Trägers an der gegenüberliegenden Konsole mittels Formschluss erfolgt, an welcher Stelle auch die hauptsächlichste Verformungsarbeit geleistet wird. Hier wird das vorzeitige Aus- bzw. Abreissen einer Verbindungsstelle herbeigeführt, um eine Trennung der Querverbindung zu erhalten. Ein gezieltes Absenken des hinteren Abschnittes des Antriebsaggregates erfolgt dabei nicht.

Der Erfindung liegt die Aufgabe zugrunde, eine hintere Lagerung für das Antriebsaggregat zu schaffen, die sich nicht nur bei einer bestimmten Stosskraft löst und Energie umwandelt, sondern die auch bewirkt, dass das Antriebsaggregat an seinem hinteren Ende zwangsläufig abgesenkt wird. Dies ist insbesondere bei Kraftfahrzeugen mit querliegendem Motor bzw. Antriebsaggregat von Vorteil, da dieses in seinem unteren Bereich breiter ist, d.h. weiter nach hinten reicht. Dieser Bereich wird somit zumindest teilweise bis unterhalb des Querträgers, in jedem Falle aber bis unterhalb von anderen nach vorne vorspringenden Teilen, z.B. des Lenkgetriebes abgesenkt, so dass das Antriebsaggregat nicht auf diese Teile auftrifft, wobei für den oberen Bereich dann ein grösserer Freiweg verbleibt. Das Mass der Absenkung hängt von der Ausbildung der hinteren Lagerung ab. Ein vollständiges Abreissen der Lagerung erfolgt jedoch nicht.

Diese Aufgabe wird bei einem Antriebsaggregat der eingangs gekennzeichneten Art dadurch erreicht, dass die vordere Befestigungsstelle bei Überschreiten einer bestimmten Stosskraft ausreissbar ausgebildet und der Halter nahe der hinteren Befestigungsstelle unter Absenkung des Armes nach hinten abbiegbar ist.

Eine besonders zweckmässige hintere Lagerung, die die gestellte Aufgabe in besonders guter Weise löst, ergibt sich dann, wenn der Streifen an den Befestigungsstellen Durchbrechungen aufweist, von denen die vordere Durchbrechung mit einem nach vorne offenen Schlitz versehen ist.

Ein Ausführungsbeispiel der Erfindung wird anhand der Zeichnung näher erläutert.

In dieser zeigen:

Fig. 1 eine Seitenansicht des Vorderteils eines Kraftfahrzeuges,
Fig. 2 die Einzelheit A in Fig. 1 in vergrössertem Massstab, teilweise im Schnitt,
Fig. 3 einen Schnitt nach Linie III–III in Fig. 2,
Fig. 4 die Seitenansicht des Vorderteils nach einem Aufprallunfall und
Fig. 5 die hintere Lagerung des Antriebsaggregates, d.h. die Einzelheit A ebenfalls nach dem Aufprallunfall.

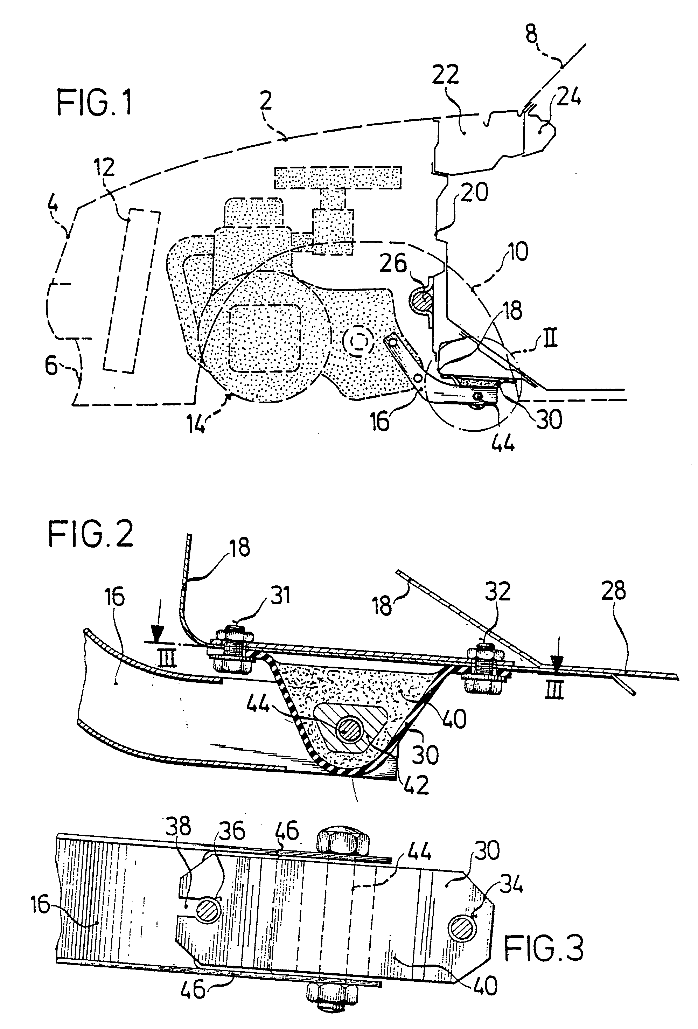

In Fig. 1 ist die Motorhaube 2 in gestrichelten Linien dargestellt. Ebenso der Kühlergrill 4 und der Spoiler 6 sowie die Windschutzscheibe 8. Der Radausschnitt ist mit 10 bezeichnet. Die Vorderräder sind der Einfachheit halber weggelassen. Im Motorraum, d.h. unterhalb der Motorhaube 2 ist der Kühler 12 angedeutet. Das Antriebsaggregat 14 besteht im wesentlichen aus dem Motor und dem Getriebe. Es handelt sich hierbei um ein querliegendes Antriebsaggregat. An diesem Block des Antriebsaggregates 14 ist ein Arm 16 befestigt, der zur hinteren Lagerung des Antriebsaggregates 14 dient. Diese Lagerung erfolgt an einem Querträger 18 des Unterbaues, von dem aus in etwa die Stirnwand 20 nach oben verläuft, die den Motorraum von der Fahrgastzelle trennt. Mit 22 ist der Wasserkasten für den Lufteinlass zur Heizung bezeichnet. Der Lenkungsquerträger 24 ist durch das nicht dargestellte Armaturenbrett nach dem Fahrgastraum hin abgedeckt. An der Stirnseite 20 befindet sich das Lenkgetriebe 26.

In Fig. 2 sind von dem Querträger 18 nur Teile davon dargestellt. An diesen schliesst sich das Bodenblech 28 nach hinten an. An der Unterseite des Querträgers 18 ist ein Halter 30 mittels zweier Befestigungsstellen 31 und 32 befestigt. Der Halter 30 besteht aus Stahl oder einem sonstigen geeigneten Material und weist die in Fig. 2 dargestellte V- bzw. U-Form in Seitenansicht auf. In Draufsicht hat er die in Fig. 3 etwa gezeigte Breite. Die Befestigungsstellen 31, 32 befinden sich in Fahrzeuglängsrichtung gesehen hintereinander. Für die hintere Befestigungsstelle 32 besitzt der Halter 30 eine Durchbrechung 34, durch die der Schraubenbolzen hindurchgeht. Für die vordere Befestigung 31 besitzt der Halter 30 zwar auch eine Durchbrechung 36, die jedoch mit einem nach vorne offenen Schlitz 38 versehen ist. Innerhalb der U- bzw. V-Form des Halters 30 befindet sich der Dämpfungsblock 40, der eine Metalleinlage 42 besitzt, die mit einer Bohrung für den Durchgang eines Bolzens 44 versehen ist. Der Halter 30 bildet mit dem Dämpfungsblock 40 und der Einlage 42 ein Gummimetallbauteil.

Der Bolzen 44 geht ferner durch zwei seitliche Abschnitte 46 hindurch, die von dem Arm 16 gebildet sind. Die seitlichen Abschnitte 46 verlaufen in unmittelbarer Nähe des Halters 30.

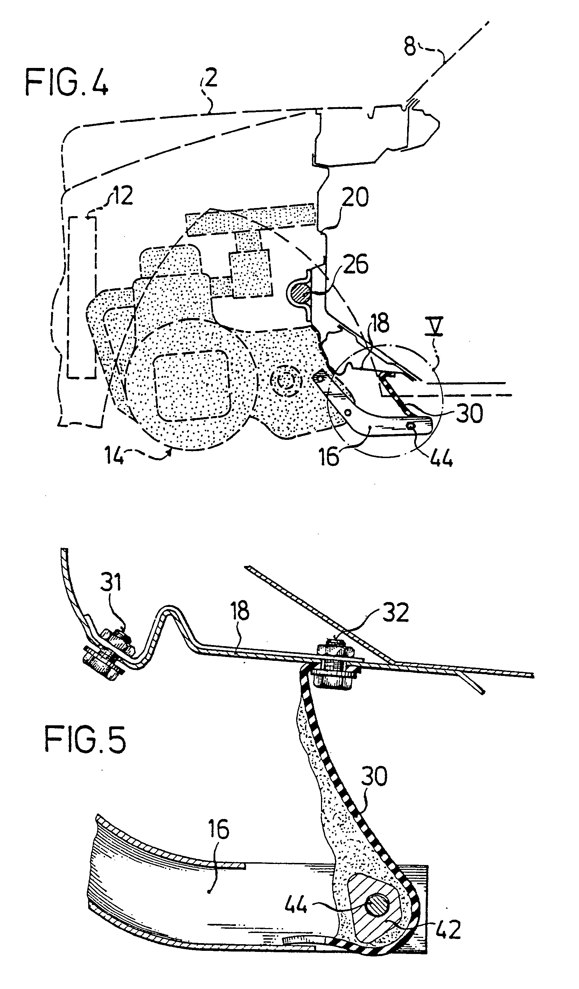

Bei einem entsprechenden starken Frontalaufprall des Fahrzeuges auf ein Hindernis wird der Vorderbau wie in Fig. 4 dargestellt verformt. Das Antriebsaggregat 14 wird dabei nach hinten bewegt. Durch die bei dem Aufprall auf das hintere Lager einwirkende Kraft wird bewirkt, dass der Halter 30 aus der vorderen Befestigungsstelle 31 ausreisst. Dieses Ausreissen ermöglicht der Schlitz 38. Nach dem Ausreissen biegt sich der Halter 30 etwa an seiner hinteren Befestigungsstelle 32 nach hinten ab, wobei bewirkt wird, dass der Arm 16, d.h. dessen hinteres Ende, das über den Bolzen 44 mit dem Halter 30 verbunden ist, nach unten abgelenkt wird. Auch der Dämpfungsblock 40 verformt sich dabei entsprechend, so dass sich eine Endstellung bzw. Verformung des hinteren Lagers nach einem entsprechenden Frontalaufprall wie in Fig. 5 gezeichnet ergibt. Bei der Bewegung des Antriebsaggregates 14 nach hinten wird dieses durch die entsprechende Verformung des hinteren Lagers mit dem Arm 16 nach unten abgelenkt, so dass z.B. wie Fig. 4 zeigt, das Antriebsaggregat nicht gegen das Lenkgetriebe 26 stösst, sondern sich unterhalb desselben nach hinten bewegen kann. Das Antriebsaggregat 14 wirkt also erst später auf die Fahrgastzelle ein. Durch das Absenken des Motors wird also ein grösserer Freiweg für das Antriebsaggregat erreicht. Durch die Verformung des hinteren Lagers wird gleichzeitig Energie abgebaut. Arm 16 und Halter 30 müssen so gestaltet und miteinander verbunden sein, dass der Arm 16 im Halter 30 gefangen bleibt.

## Patentansprüche

1. Antriebsaggregat (14) für Kraftfahrzeuge mit einer hinteren Lagerung bestehend aus einem Halter (30), der aus einem in Längsrichtung verlaufenden, zwischen zwei in Fahrzeuglängsrichtung gesehen hintereinanderliegenden Befestigungsstellen (31, 32) eine nach unten reichende U-Form bildenden Streifen besteht, wobei in der U-Form ein Dämpfungsblock (40) vorgesehen ist, durch den ein Bolzen (44) hindurchgeführt ist, der zwei seitlich des Halters (30) liegende Abschnitte (46) eines mit dem Antriebsaggregat (14) verbundenen Armes (16) od. dgl. verbindet, dadurch gekennzeichnet, dass die vordere Befestigungsstelle (31) bei Überschreiten einer bestimmten Stosskraft ausreissbar ausgebildet und der Halter (30) nahe der hinteren Befestigungsstelle (32) unter Absenkung des Armes (16) nach hinten abbiegbar ist.

2. Antriebsaggregat nach Anspruch 1, dadurch gekennzeichnet, dass der Streifen an den Befestigungsstellen (31, 32) Durchbrechungen (34, 36) aufweist, von denen die vordere Durchbrechung (36) mit einem nach vorne offenen Schlitz (38) versehen ist.

## Claims

1. Drive unit (14) for motor vehicles with a rear mounting consisting of a mount (30) which consists of a longitudinally extending strip forming a downwardly pointing U-shape between two fixing points (31, 32) arranged one behind the other as seen in the longitudinal direction of the vehicle, wherein in the U-shape is provided a damping block (40) through which passes a bolt (44) which connects two sections (46) of an arm (16) or the like connected to the drive unit (14), the two sections (46) being disposed laterally of the mount (30), characterised in that the front fixing point (31) can be pulled out if a given impact force is exceeded, and the mount (30) can be bent rearwardly near the rear fixing point (32), with lowering of the arm (16).

2. Drive unit according to claim 1, characterised in that the strip comprises apertures (34, 36) at the fixing points (31, 32), of which the front aperture (36) is provided with a forwardly opening slot (38).

## Revendications

1. Ensemble d'entraînement (14) pour véhicules automobiles doté d'une suspension arrière composée d'un support (30) qui est constitué par une bande de direction longitudinale formant entre deux points de fixation (31, 32) situés l'un derrière l'autre par rapport à la direction longitudinale du véhicule une sorte de U dans lequel est placé un bloc amortisseur (40) traversé par un boulon (44) qui relie entre eux deux secteurs (46), placés latéralement au support (30), d'un bras (16) ou autre élément analogue assemblé audit ensemble d'entraînement (14), ce dernier caractérisé par le fait que le point de fixation avant (31) est établi arrachable en cas de dépassement d'une force de choc déterminée et que le support (30) est pliable vers l'arrière près du point de fixation arrière (32) sous abaissement du bras (16).

2. Ensemble d'entraînement selon la revendication 1 caractérisé par le fait qu'aux points de fixation (31, 32) la bande présente des perçages traversants dont celui de l'avant (36) est complété d'une fente (38) ouverte vers l'avant.

FIG.1

FIG.2

FIG.3

FIG.4

FIG.5